# EUROPEAN PATENT SPECIFICATION

(11) **EP 2 821 257 B1**
(45) Date of publication and mention of the grant of the patent: **10.10.2018**
(21) Application number: 14174555.4
(22) Date of filing: 26.06.2014
(51) Int. Cl.: B60C 11/11

(54) **Pneumatic tire**
Luftreifen
Pneu

(30) Priority: 05.07.2013 JP 2013142074
(43) Date of publication of application: 07.01.2015
(73) Proprietor: Sumitomo Rubber Industries, Ltd., Hyogo-ken (JP)
(72) Inventor: Fujita, Masayuki, Kobe-shi, Hyogo-ken, 651-0072 (JP)
(74) Representative: Manitz Finsterwald Patentanwälte PartmbB

(56) References cited:
- EP-A2- 2 777 950
- JP-A- 2006 082 734
- US-A1- 2012 060 990

## Description

### BACKGROUND OF THE INVENTION

### Field of the Invention

The present invention relates to a pneumatic tire that may improve wear resistance and wet grip in a well-balanced manner.

### Description of the Related Art

Japanese Patent Unexamined Application Publication No. 2012-116245 disclosed a pneumatic tire designed for better wet grip. The pneumatic tire comprises a tread portion having a tread pattern provided with a plurality of circumferentially extending main grooves and a plurality of axially extending lateral grooves to form a plurality of tread blocks. In order to improve drainage performance of the tire, each groove is designed to have a large groove volume.

Unfortunately, since the grooves having a large groove volume tend to lower the rigidity of the tread pattern, wear resistance of the tread portion of the tire may be deteriorated.

Another pneumatic tire with a tread portion with designated rotation direction and comprising inclined grooves with bent portions and thus forming central blocks and shoulder blocks is known from JP 2006 082734 A. However, in the designated rotation direction, the foremost portion of the central blocks is positioned forward of the foremost portion of the adjacent shoulder blocks.

EP 2777950 A2, which forms part of the state of the art according to Art. 54(3) EPC, discloses a pneumatic tire whose tread portion is provided with a plurality of V-shaped main inclined grooves and pairs of connecting grooves that connect circumferentially adjacent main inclined grooves on each side of the tire equator.

### SUMMARY OF THE INVENTION

The present invention has been worked out in light of the circumstances described above, and has a main object of providing a pneumatic tire having a tread portion that may improve wear resistance and wet grip in a well-balanced manner by modifying the configuration of main inclined grooves as well as an arrangement between a central block and a shoulder block.

According to one aspect of the present invention, a pneumatic tire includes a tread portion having a designated rotation direction. The tire comprises the tread portion provided with a plurality of main inclined grooves extending axially outward from a tire equator to both tread edges. Each of the main inclined grooves includes, in each side of the tire equator, a first portion and a second portion. The first portion extends axially outward from the tire equator in parallel to an axial direction of the tire or alternatively while inclining toward the opposite direction to the designated rotation direction of the tire. The second portion extends axially outwardly from the first portion while inclining toward the opposite direction to the designated rotation direction of the tire at an angle larger than that of the first portion so that a bent portion is formed between the first portion and the second portion. The bent portions of each of the main inclined grooves are communicated with the respective second portions of one of the main inclined grooves next to the concerned main inclined groove in the designated rotation direction so as to form central blocks and shoulder blocks on the tread portion. In the designated rotation direction, a foremost portion of each of the central blocks is positioned backward of a foremost portion of one of the shoulder blocks axially outwardly adjacent to the concerned central block.

The tread portion is further provided with a center longitudinal groove to form a pair of central blocks each between two adjacent main inclined grooves.

In another aspect of the present invention, the center longitudinal groove may have a groove width in a range of from 5% to 35% of a tread contact width.

In another aspect of the present invention, the tread portion may include a central region having an axial width of 50% of a tread contact width, and the central region may have a land ratio in a range of from 30% to 60%.

In another aspect of the present invention, the first portion may have a groove width in a range of from 0.3% to 2.3% of a circumferential length of the tire at the tire equator.

In another aspect of the present invention, the central block may include a leading edge and a trailing edge with respect to the designated rotation direction, the leading edge and the trailing edge may be inclined in the same direction with respect to the axial direction of the tire, and an absolute value of the difference between angles of the leading edge and the trailing edge may be within 5 degrees.

In another aspect of the present invention, the respective angles of the leading edge and the trailing edge may be set in a range of not more than 45 degrees.

In another aspect of the present invention, the second portion may have a groove width in a range of from 5% to 35% of a tread contact width.

In another aspect of the present invention, the angle of the second portion may be in a range of from 60 to 80 degrees with respect to the axial direction of the tire.

In another aspect of the present invention, the shoulder block may be provided with a shoulder lateral groove having an axially inner end communicated with the main inclined groove, and an axially outer end opened at the tread edge, the shoulder lateral groove may include an axially inner portion having a groove width in a range of from 1.0 to 3.0 mm, and an axially outer portion having a groove width larger than that of the inner portion, and the groove width of the outer portion may be set in a range of from 25% to 100% of a groove width of the main inclined groove.

In another aspect of the present invention, the outer portion may have a groove depth in a range of from 60% to 140% of a groove depth of the main inclined groove.

In another aspect of the present invention, the inner portion may have a groove depth in a range of from 20% to 80% of a groove depth of the main inclined groove.

In another aspect of the present invention, the shoulder block may include a leading portion and a trailing portion which are separated by the shoulder lateral groove, and the leading portion may have an area of a tread surface in a range of from 90% to 110% of that of the trailing portion.

### BRIEF DESCRIPTION OF THE DRAWINGS

FIG. 1 and FIG. 2 are development views each illustrating a tread portion of a pneumatic tire in accordance with an embodiment of the present invention;

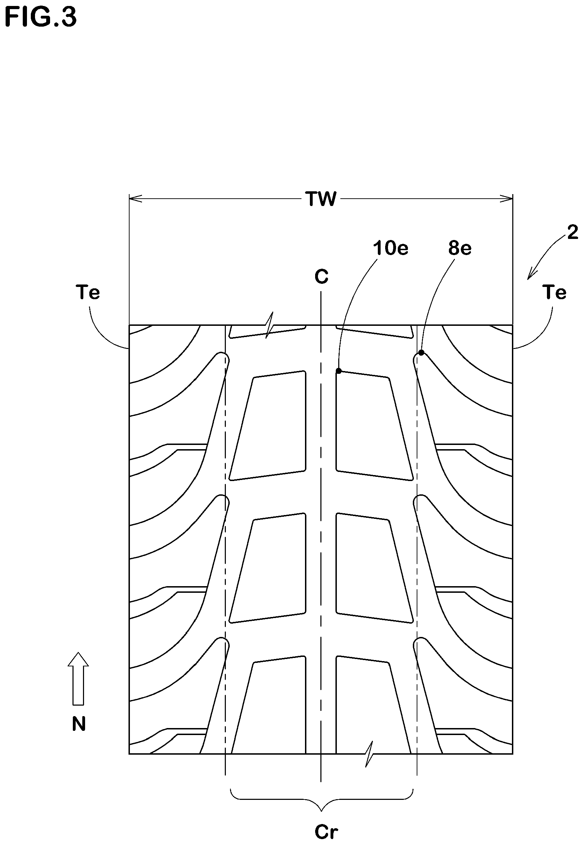

FIG. 3 is a development view illustrating a tread portion of a pneumatic tire in accordance with another embodiment of the present invention; and

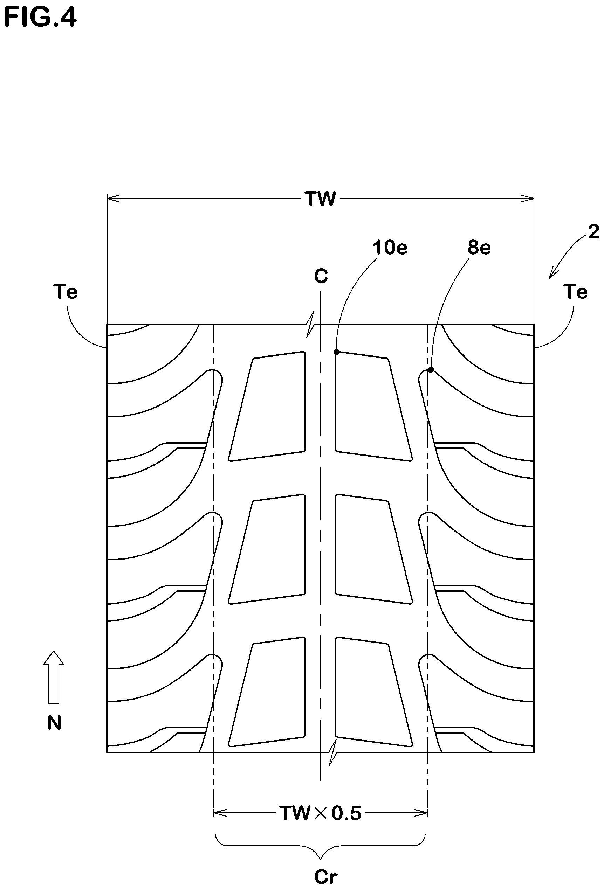

FIG. 4 is a development view illustrating a tread portion of a comparative example tire.

### DETAILED DESCRIPTION

An embodiment of the present invention will be explained below with reference to the accompanying drawings.

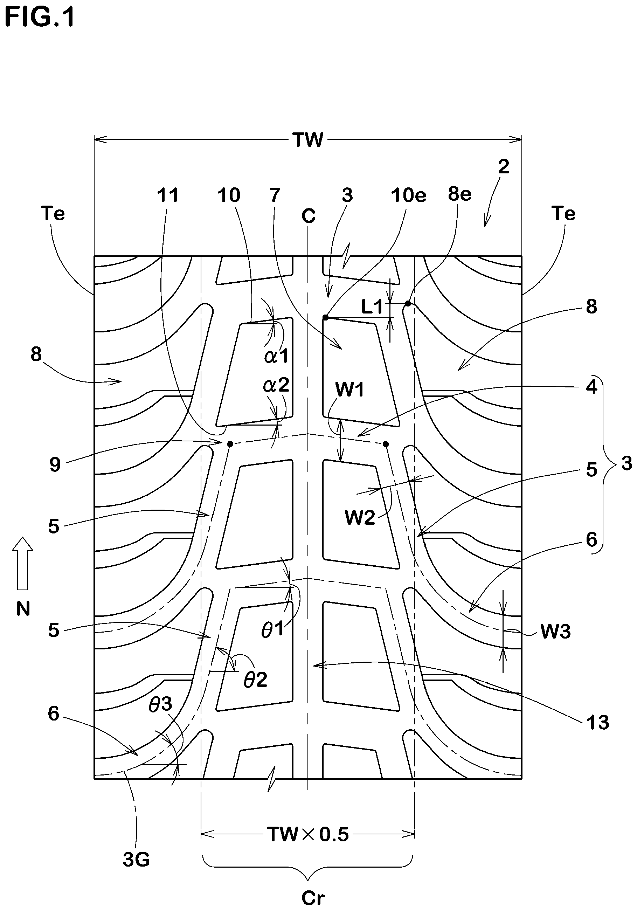

As shown in FIG. 1, a pneumatic tire in accordance with the present embodiment is embodied as a tire for racing karts, for instance. The tire includes a tread portion 2 having a designated rotation direction N. The rotation direction N may be indicated on a sidewall portion (not shown) of the tire using characters or a mark.

The tread portion 2 is provided with a plurality of main inclined grooves 3 which are formed at an interval in a circumferential direction of the tire. In this embodiment, each main inclined groove 3 extends axially outward from a tire equator C beyond tread edges Te and Te. The main inclined grooves 3 may improve drainage performance of the tire by dispersing water from between the tire equator C and the roads through the tread edges Te.

Here, the tread edge Te is defined as an axially outer edge in a ground contact patch of the tread portion 2 under a standard loaded condition in which the tire is mounted on a standard wheel rim with a standard pressure and is loaded with a standard tire load at a camber angle of set to zero.

In this application including specification and claims, various dimensions, positions and the like of the tire refer to those under a standard unloaded condition of the tire unless otherwise noted. The standard unloaded condition is such that the tire is mounted on the standard wheel rim with the standard pressure and is loaded with no tire load. The axial distance between the tread edges Te and Te of the tire under the standard unloaded condition is defined as the tread contact width TW.

The standard wheel rim is a wheel rim officially approved or recommended for the tire by standards organizations, i.e. JATMA, TRA, ETRTO, and the like which are effective in the area where the tire is manufactured, sold or used. For example, the standard wheel rim is the "standard rim" specified in JATMA, the "Measuring Rim" in ETRTO, and the "Design Rim" in TRA or the like.

The standard pressure and the standard tire load are the maximum air pressure and the maximum tire load for the tire specified by the same organization in the Air-pressure/Maximum-load Table or similar list. The standard pressure is the "maximum air pressure" in JATMA, the "Inflation Pressure" in ETRTO, and the maximum pressure given in the "Tire Load Limits at Various Cold Inflation Pressures" table in TRA or the like. In case of passenger car tires, however, the standard pressure is uniformly defined by 180 kPa. Furthermore, in case of racing kart tires, the standard pressure is uniformly defined by 100 kPa.

The standard tire load is the "maximum load capacity" in JATMA, the "Load Capacity" in ETRTO, and the maximum value given in the above-mentioned table in TRA or the like. In case of passenger car tires, however, the standard tire load is uniformly defined by 88 % of the maximum tire load. Furthermore, in case of racing kart tires, the standard tire load is uniformly defined by 392 kN.

Each main inclined groove 3 comprises a first portion 4, a second portion 5 arranged axially outside of the first portion 4, and a third portion 6 arranged axially outside of the second portion 5, in each side of the tire equator C.

In this embodiment, the first portion 4 extends axially outward from the tire equator C in a straight manner while inclining toward an opposite direction with respect to the designated rotation direction N of the tire. Namely, a pair of first portions 4 arranged on both sides of the tire equator C form a V-shape (an inverted V-shaped in FIG. 1) that protrudes toward the rotation direction N. In another aspect of the present invention, the first portion 4 may extend along the axial direction of the tire from the tire equator C in order to enhance rigidity of the tread portion 2 around the tire equator C.

The second portion 5 extends axially outwardly from the first portion 4 while inclining toward the opposite direction with respect to the designated rotation direction N at an angle θ2 larger than an angle θ1 of the first portion 4 so as to form a bent portion 9. In this embodiment, the second portion 5 is formed in a straight manner to smoothly drain water toward the tread edge Te by utilizing traveling of the tire according to the rotation direction N.

Each angle of the first portion 4, second portion 5 and third portion 6 is defined as the angle measured using a groove centerline 3G thereof. When the groove centerline 3G is a curved line, the angle thereof means an angle of its tangent. The groove centerline 3G is an imaginary line passing through the middle places between groove walls of the groove.

In this embodiment, the main inclined groove 3 includes, in each side of the tire equator C, a bent portion 9 where the first portion 4 and the second portion 5 are connected so as to form a bent corner. The bent portions 9 of each of the main inclined grooves 3 are communicated with the second portion 5 of the respective second portions 5 of one of the main inclined grooves 3 next to the concerned main inclined groove 3 in the designated rotation direction N. Thus, the tread portion 2 is provided with a plurality of central blocks 7, and a plurality of shoulder blocks 8 arranged axially both sides of the central blocks 7.

Preferably, the first portion 4 has a groove width W1 in a range of from 0.3% to 2.3% of the whole circumferential length of the tire at the tire equator C. When the groove width W1 of the first portion 4 is less than 0.3% of the whole circumferential length of the tire, wet performance of the tire may be lowered. When the groove width W1 of the first portion 4 is more than 2.3% of the whole circumferential length of the tire, wear resistance of the tire may be deteriorated due to low circumferential rigidity of the central blocks 7. When the tread portion 2 is provided with a groove on the tire equator C, the whole circumferential length of the tire is measured using an imaginary tread portion having a smooth surface by filling the void of the groove with rubber.

Preferably, the second portion 5 has a groove width W2 in a range of from 5% to 35% of the tread contact width TW. When the groove width W2 is less than 5% of the tread contact width TW, wet performance of the tire may be lowered. When the groove width W2 is more than 35% of the tread contact width TW, the lateral rigidity of the central blocks 7 and the shoulder blocks 8 may be lowered.

Preferably, the second portion 5 has the angle θ2 in a range of from 60 to 80 degrees with respect to the axial direction of the tire. When the angle θ2 of the second portion 5 is less than 60 degrees, water in the second portion 5 may not smoothly flow toward the tread edge Te when straight traveling ahead. When the angle θ2 of the second portion 5 is more than 80 degrees, wet performance of the tire may be lowered due to high drainage resistance of the second portion 5 by increase of its groove length.

The third portion 6 is inclined at angle θ3 with respect to the axial direction of the tire, and the angle θ3 may preferably be set smaller than the angle θ2 of the second portion 5. In this embodiment, the third portion 6 extends in an arc manner so that the angle θ3 gradually decreases toward the tread edge Te. Thus, water in the main inclined groove may smoothly be drained at the tread edge Te through the third portion 6 by utilizing a tire lateral force. Furthermore, the shoulder blocks 8, which are subjected to large side force when cornering, may be given a high lateral rigidity at its axially outer portion.

Preferably, the third portion 6 has a groove width W3 larger than the groove width W2 of the second portion 5 in order to smoothly drain the water through the second portion 5. Preferably, the groove width W3 of the third portion 6 is set in a range of from 6% to 40% of the tread contact width TW.

Preferably, each main inclined groove 3 has a groove depth in a range of from 3.0 to 7.0 mm in order to improve wet performance as well as wear resistance in a well-balanced manner. In this embodiment, the first portion 4, the second portion 5, and the third portion 6 have the same groove depth.

In this embodiment, the tread portion 2 has a line symmetrical tread pattern with respect to the tire equator C. However, the tread pattern in accordance with the present invention is not particularly limited as such.

The central block 7 includes a leading edge 10 extending along the first portion 4 which is arranged in front of the central block 7 with respect to the rotation direction N, and a trailing edge 11 extending along the first portion 4 which is arranged on the back of the central block 7 with respect to the rotation direction N.

The leading edge 10 of the central block 7 includes a foremost portion 10e. In the designated rotation direction N, the foremost portion 10e of each of the central blocks 7 is positioned backward of a foremost portion 8e of one of the shoulder blocks 8 axially outwardly adjacent to the concerned central block 7. Thus, the load acting on the tread portion 2 during traveling is distributed both the central block 7 and shoulder blocks 8 so that the load acting on the leading edge 10 of the central block 7 is reduced. Accordingly, the wear, e.g. uneven wear on the leading edge 10 of the central block 7, may be prevented.

In order to further improve the advantages above, the circumferential distance L1 between the foremost portion 8e of the shoulder block 8 and the foremost portion 10e of the leading edge 10 of the central block 7 is preferably set in a range of from 30% to 50% of the groove width W1 of the first portion 4.

Preferably, the foremost portion 8e of the shoulder block 8 is positioned in a central region Cr of the tread portion 2, wherein the central region Cr is a region having an axial width of 50% of the tread contact width TW. Thus, the central region Cr, which is subjected to a large contacting pressure against the ground during traveling, may be given relatively high pattern rigidity so that the uneven wear on the leading edge 10 is further prevented.

Preferably, the leading edge 10 and the trailing edge 11 are inclined in the same direction with respect to the axial direction of the tire. This may provide the central block 7 with high circumferential rigidity to improve its wear resistance.

Preferably, an angle α1 of the leading edge 10 and an angle α2 of the trailing edge 11 are set in a range of from 0 to 45 degrees with respect to the axial direction of the tire. When one of the angles α1 and α2 is more than 45 degrees, the circumferential rigidity of the central block 7 may excessively be lowered. Preferably, the angle α1 of the leading edge 10 and the angle α2 of the trailing edge 11 may be set in a range of from 5 to 15 degrees to further improve not only wear resistance but also wet performance of the tire.

In order to further improve the advantages above, an absolute value of the difference between the angle α1 of the leading edge 10 and the angle α2 of the trailing edge 11 is preferably within 5 degrees, more preferably within 3 degrees.

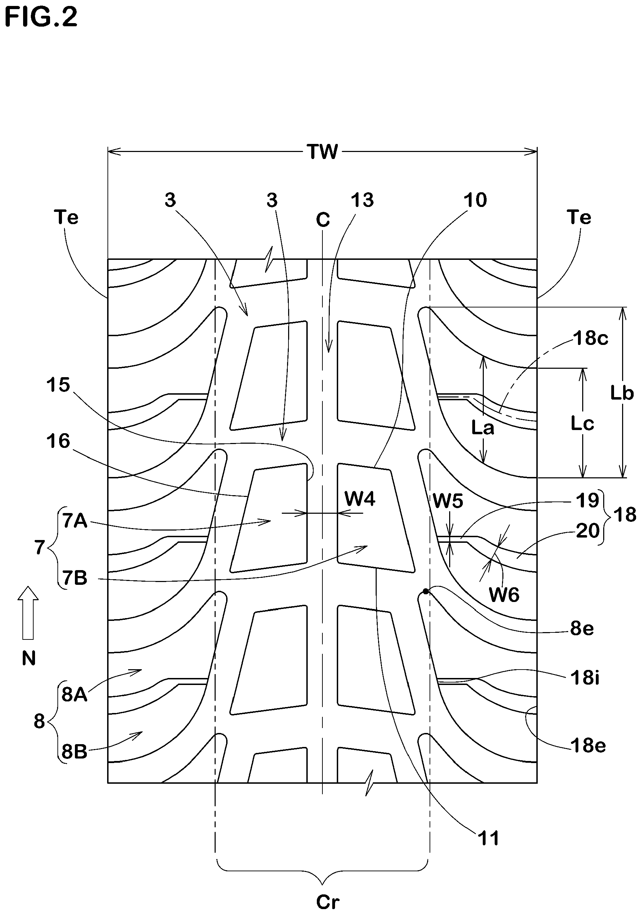

As shown in FIG. 2, the tread portion 2 is further provided with a center longitudinal groove 13 extending on the tire equator C to effectively drain water from under the tire equator C. Thus, a pair of central blocks 7A and 7B are provided between main inclined grooves 3 that are adjacent in the circumferential direction of the tire.

Preferably, the center longitudinal groove 13 has a groove width W4 in a range of from 5% to 35%, more preferably in a range of from 10% to 30% of the tread contact width TW to improve wear resistance and wet performance of the tire in a well-balanced manner.

Preferably, the center longitudinal groove 13 has a groove depth (not shown) in a range of not less than 80%, more preferably not less than 90%, but preferably not more than 120%, more preferably not more than 110% of the groove depth of the main inclined groove 3 to improve wear resistance and wet performance of the tire in a well-balanced manner.

The respective central blocks 7A and 7B include an inner edge 15 that extends along with the center longitudinal groove 13, and an outer edge 16 that extends along with the second portion 5 of the main inclined groove 3. The respective inner edge 15 and outer edge 16 connect the leading edge 10 and the trailing edge 11.

Preferably, the inner edge 15 and the outer edge 16 extend in a straight fashion so that the grooves 13 and 5 adjacent thereof may have low drainage resistance while enhancing the lateral rigidity of the central blocks 7A and 7B.

The shoulder block 8 has a shape having a circumferential length La which increases toward the tread edge Te so that the circumferential rigidity thereof increases toward the tread edge Te. Thus, the shoulder block 8 may offer a large contacting area at the side of the tread edge Te during cornering so that wear resistance thereof is improved.

The shoulder block 8 is provided with a shoulder lateral groove 18 for improving drainage performance. The shoulder lateral groove 18 includes an axially inner end 18i communicated with the main inclined groove 3, and an axially outer end 18e opened at the tread edge Te.

The shoulder lateral groove 18 divides the shoulder block 8 into a leading portion 8A and a trailing portion 8B.

Preferably, the leading portion 8A has a tread surface area in a range of from 90% to 110%, more preferably in a range of from 95% to 105%, in relation to a tread surface area of the trailing portion 8B to prevent from uneven wear occurring thereon.

In order to further improve the advantages described above, the inner end 18i of the shoulder lateral groove 18 is preferably located from the foremost portion 8e at a distance of 40% to 60% of the largest circumferential length Lb of the shoulder block 8. The outer end 18e of the shoulder lateral groove 18 is preferably located from the foremost portion 8e at a distance of 40% to 60% of a circumferential length Lc of the shoulder block 8 at the tread edge Te. The respective positions of the inner and outer ends 18i and 18e are positions defined using the groove centerline 18c of the shoulder lateral groove 18.

The shoulder lateral groove 18 comprises an axially inner portion 19 having a groove width W5, and an axially outer portion 20 having a groove width W6 larger than the groove width W5 of the inner portion 19.

The inner portion 19 extends axially outwardly from the inner end 18i in a straight fashion. Preferably, the groove width W5 of the inner portion 19 may be set in a range of from 1.0 to 3.0 mm to maintain the rigidity of the shoulder block 8 at its axially inner side while improving drainage performance. In the same point of view, the inner portion 19 preferably has a groove depth (not shown) in a range of from 20% to 80% of the groove depth of the main inclined groove 3.

The outer portion 20 extends along the third portion 6 of the main inclined groove 3 from the inner portion 19 to the tread edge Te in an arc shape. Thus, an excellent rigidity balance between the leading portion 8A and the trailing portion 8B may be offered.

Preferably, the groove width W6 of the outer portion 20 may be set in a range of from 25% to 100% of the groove width of the main inclined groove 3 to maintain the rigidity of the shoulder block 8 while improving wet grip performance of the tire. In the same point of view, the outer portion 20 preferably has a groove depth (not shown) in a range of from 60% to 140% of the groove depth of the main inclined groove 3.

Preferably, the central region Cr of the tread portion 2 has a land ratio in a range of from 30% to 60%, in order to further improve wear resistance as well as wet grip performance of the tire. More preferably, the central region Cr has the land ratio in a range of from 40% to 50%. Here, the land ratio of the central region Cr is defined as a ratio Mb/Ma of the net ground contact area Mb to the gross ground contact area Ma that is obtained by filling the whole grooves up, in the central region Cr.

The present invention is more specifically described and explained by means of the following Examples and References. It is to be understood that the present invention is not limited to these Examples and embodiments described above. Comparison Test

Pneumatic tires for racing karts shown in FIG. 1 and Table 1 were manufactured and tested. Major common specifics of the tires and test methods are as follows.

### Details of test tires:

Tread contact width TW: 125 mm
Main inclined groove depth: 5.5 mm
Center longitudinal groove depth: 5.5 mm
Shoulder lateral groove depth: 5.5 mm
Groove width W6 of outer portion / main inclined groove width: 60%
Groove depth of outer portion / main inclined groove depth: 100%
Inner portion groove width W5: 1.5 mm
Inner portion groove depth / main inclined groove depth: 60%
Tread surface area of leading portion / tread surface area of trailing portion: 100%

### Wet grip performance:

The test tires were installed to a racing kart having a 100cc displacement, as its whole wheels under the following condition. Then, a test driver drove the racing kart on a wet asphalt road with a puddle 5mm deep, and evaluated wet grip performance of the test tires by his feeling. The test results were indicated using a score based on Ref.1 being 2.0 in Table 1. The larger the index, the better the performance is.
Front / Rear
Size: 10x4.50-5 / 11x6.50-5
Rim: 4.5 / 6.5
Internal pressure: 100kPa / 100kPa

### Time trial test:

The test driver did a time attack of 7 laps using the racing kart on a test course of 734m long under two conditions including a dry condition and a wet condition having 5 mm water puddle. The test results were evaluated total lap time of wet and dry conditions using the following score.
1.0: The difference between the best time and the evaluated time is equal to or more than 3.0 seconds.
1.5: The difference described above is not less than 2.5 seconds, but less than 3.0 seconds.
2.0: The difference described above is not less than 2.0 seconds, but less than 2.5 seconds.
2.5: The difference described above is not less than 1.5 seconds, but less than 2.0 seconds.
3.0: The difference described above is not less than 1.0 seconds, but less than 1.5 seconds.
3.5: The difference described above is not less than 0.5 seconds, but less than 1.0 seconds.
4.0: The difference described above is not less than 0.2 seconds, but less than 0.5 seconds.
4.5: The difference described above is less than 0.2 seconds.
5.0: The difference described above is zero.

### Wear resistance test:

After the time attack test, abrasion generated on the tread portion of each test tire was checked and scored using the following standard.
1: Abrasion in critical level was generated.
2: Abrasion in intermediate level was generated.
3: Abrasion in low level was generated.
4: Sign of very small abrasion was observed.
5: No abrasion was generated.

### Total performance:

Test results are shown in Table 1 using an average score of the wet grip, time trial, and wear resistance tests.

Test results show that the example tires in accordance with the present invention have excellent performance in well balance as compared to the reference tires.

**Table 1-1**

| | Ref.1 | Ex.1 | Ex.2 | Ex.3 | Ex.4 | Ex.5 | Ex.6 | Ex.7 | Ex.8 | Ex.9 | Ex.10 |
|---|---|---|---|---|---|---|---|---|---|---|---|
| Tread pattern | FIG.4 | FIG.1 | FIG.3 | FIG.1 | FIG.1 | FIG.1 | FIG.1 | FIG.1 | FIG.1 | FIG.1 | FIG.1 |
| Central region land ratio (%) | 45 | 45 | 45 | 25 | 30 | 60 | 65 | 45 | 45 | 45 | 40 |
| W4/TW (%) | 15 | 15 | 15 | 15 | 15 | 15 | 15 | 4 | 5 | 35 | 40 |
| W1 / tire circumferential length (%) | 1.3 | 1.3 | 1.3 | 1.3 | 1.3 | 1.3 | 1.3 | 1.3 | 1.3 | 1.3 | 1.3 |
| Angles α1 and α2 (deg.) | 5 | 5 | 5 | 5 | 5 | 5 | 5 | 5 | 5 | 5 | 5 |
| W2/TW (%) | 15 | 15 | 15 | 15 | 15 | 15 | 15 | 15 | 15 | 15 | 15 |
| Angle θ2 of second portion (deg.) | 70 | 70 | 70 | 70 | 70 | 70 | 70 | 70 | 70 | 70 | 70 |
| Ratio L1/W1 (%) | 40 | 40 | 40 | 40 | 40 | 40 | 40 | 40 | 40 | 40 | 40 |
| Wet grip performance [Score] | 2 | 5 | 3 | 3 | 3.5 | 3.5 | 1.5 | 2 | 3.5 | 4 | 3.5 |
| Wear resistance test [Score] | 2 | 5 | 3 | 2 | 3 | 4 | 4 | 5 | 4 | 4 | 2 |
| Time attack test [Score] | 2 | 5 | 3 | 2.5 | 3 | 3 | 2 | 3 | 4 | 4 | 3 |
| Total performance [Avg.] | 2 | 5 | 3 | 2.5 | 3.2 | 3.5 | 2.5 | 3.3 | 3.8 | 4 | 2.8 |

**Table 1-2**

| | Ex.11 | Ex.12 | Ex.13 | Ex.14 | Ref.2 | Ex.15 | Ex.16 | Ex.17 | Ex.18 | Ex.19 |
|---|---|---|---|---|---|---|---|---|---|---|
| Tread pattern | FIG.1 | FIG.1 | FIG.1 | FIG.1 | FIG.1 | FIG.1 | FIG.1 | FIG.1 | FIG.1 | FIG.1 |
| Central region land ratio (%) | 45 | 45 | 45 | 40 | 45 | 45 | 45 | 40 | 45 | 45 |
| W4/TW (%) | 15 | 15 | 15 | 15 | 15 | 15 | 15 | 15 | 15 | 15 |
| W1 / tire circumferential length (%) | 0.2 | 0.3 | 2.3 | 2.5 | 1.3 | 1.3 | 1.3 | 1.3 | 1.3 | 1.3 |
| Angles α1 and α2 (deg.) | 5 | 5 | 5 | 5 | -5 | 0 | 35 | 40 | 5 | 5 |
| W2/TW (%) | 15 | 15 | 15 | 15 | 15 | 15 | 15 | 15 | 3 | 5 |
| Angle θ2 of second portion (deg.) | 70 | 70 | 70 | 70 | 70 | 70 | 70 | 70 | 70 | 70 |
| Ratio L1/W1 (%) | 40 | 40 | 40 | 40 | 40 | 40 | 40 | 40 | 40 | 40 |
| Wet grip performance [Score] | 3 | 4.3 | 4.5 | 4 | 2 | 4.3 | 4.5 | 4 | 2 | 3.5 |
| Wear resistance [Score] | 5 | 5 | 4 | 3 | 2 | 5 | 4 | 3 | 5 | 4 |
| Time attack [Score] | 4 | 4.5 | 4.5 | 4 | 2.5 | 4.5 | 4.5 | 4 | 3 | 4 |
| Total performance [Avg.] | 4 | 4.6 | 4.3 | 3.7 | 2.2 | 4.6 | 4.3 | 3.7 | 3.3 | 3.8 |

**Table 1-3**

| | Ex.20 | Ex.21 | Ex.22 | Ex.23 | Ex.24 | Ex.25 | Ex.26 | Ex.27 | Ex.28 | Ex.29 |
|---|---|---|---|---|---|---|---|---|---|---|
| Tread pattern | FIG.1 | FIG.1 | FIG.1 | FIG.1 | FIG.1 | FIG.1 | FIG.1 | FIG.1 | FIG.1 | FIG.1 |
| Central region land ratio (%) | 45 | 40 | 45 | 45 | 45 | 45 | 45 | 45 | 45 | 45 |
| W4/TW (%) | 15 | 15 | 15 | 15 | 15 | 15 | 15 | 15 | 15 | 15 |
| W1 / tire circumferential length (%) | 1.3 | 1.3 | 1.3 | 1.3 | 1.3 | 1.3 | 1.3 | 1.3 | 1.3 | 1.3 |
| Angles α1 and α2 (deg.) | 5 | 5 | 5 | 5 | 5 | 5 | 5 | 5 | 5 | 5 |
| W2/TW (%) | 35 | 40 | 15 | 15 | 15 | 15 | 15 | 15 | 15 | 15 |
| Angle θ2 of second portion (deg.) | 70 | 70 | 55 | 60 | 80 | θ2 | 70 | 70 | 70 | 70 |
| Ratio L1/W1 (%) | 40 | 40 | 40 | 40 | 40 | 40 | 25 | 30 | 50 | 55 |
| Wet grip performance [Score] | 4 | 3.5 | 2 | 3.5 | 4 | 3.5 | 3 | 4 | 4 | 4 |
| Wear resistance [Score] | 4 | 2 | 5 | 4 | 4 | 2 | 5 | 5 | 4 | 2 |
| Time attack [Score] | 4 | 3 | 3 | 4 | 4 | 3 | 3 | 4 | 4 | 4 |
| Total performance [Avg.] | 3.8 | 2.8 | 3.3 | 3.8 | 3.8 | 2.8 | 3.7 | 4.3 | 4 | 3.3 |

## Claims

1. A pneumatic tire comprising:
a tread portion (2) having a designated rotation direction (N), the tread portion (2) provided with a plurality of main inclined grooves (3) each extending axially outward from the tire equator (C) to both tread edges (Te);
each of the main inclined grooves (3) comprising, in each side of the tire equator (C), a first portion (4) and a second portion (5), the first portion (4) extending axially outward from the tire equator (C) in parallel to the axial direction of the tire or alternatively while inclining to the opposite direction to the designated rotation direction (N) of the tire, the second portion (5) extending axially outwardly from the first portion (4) while inclining to the opposite direction to the designated rotation direction (N) at an angle (θ2) larger than that of the first portion (4) so that a bent portion (9) is formed between the first portion (4) and the second portion (5);
the bent portions (9) of each of the main inclined grooves (3) communicated with the respective second portions (5) of one of the main inclined grooves (3) next to the concerned main inclined groove (3) in the designated rotation direction (N) so that central blocks (7) and shoulder blocks (8) are formed on the tread portion (2); and
in the designated rotation direction (N), a foremost portion (10e) of each of the central blocks (7) being positioned backward of a foremost portion (8e) of one of the shoulder blocks (8) axially outwardly adjacent to the concerned central block (7);
wherein the tread portion (2) is further provided with a center longitudinal groove (13) to form a pair of central blocks (7A, 7B) each between two adjacent main inclined grooves (3).

2. The pneumatic tire according to claim 1,
wherein the center longitudinal groove (13) has a groove width (W4) in a range of from 5% to 35% of a tread contact width (TW).

3. The pneumatic tire according to claim 1 or 2,
wherein the tread portion (2) comprises a central region (Cr) having an axial width of 50% of a tread contact width (TW), and
the central region (Cr) has a land ratio in a range of from 30% to 60%.

4. The pneumatic tire according to any one of claims 1 to 3,
wherein the first portion (4) has a groove width (W1) in a range of from 0.3% to 2.3% of a circumferential length of the tire at the tire equator (C).

5. The pneumatic tire according to any one of claims 1 to 4,
wherein the central block (7) comprises a leading edge (10) and a trailing edge (11) with respect to the designated rotation direction (N),
the leading edge (10) and the trailing edge (11) are inclined in the same direction with respect to the axial direction of the tire, and
an absolute value of the difference between angles (α1, α2) of the leading edge (10) and the trailing edge (11) is within 5 degrees.

6. The pneumatic tire according to claim 5,
wherein the respective angles (α1, α2) of the leading edge (10) and the trailing edge (11) are in a range of not more than 45 degrees.

7. The pneumatic tire according to any one of claims 1 to 6,
wherein the second portion (5) has a groove width (W2) in a range of from 5% to 35% of a tread contact width (TW).

8. The pneumatic tire according to any one of claims 1 to 7,
wherein the angle (θ2) of the second portion (5) is in a range of from 60 to 80 degrees with respect to the axial direction of the tire.

9. The pneumatic tire according to any one of claims 1 to 8,
wherein the shoulder block (8) is provided with a shoulder lateral groove (18) having an axially inner end (18i) communicated with the main inclined groove (3), and an axially outer end (18e) opened at the tread edge (Te),
the shoulder lateral groove (18) comprises an axially inner portion (19) having a groove width (W5) in a range of from 1.0 to 3.0 mm, and an axially outer portion (20) having a groove width (W6) larger than that of the inner portion (19), and
the groove width (W6) of the outer portion (20) is in a range of from 25% to 100% of a groove width of the main inclined groove (3).

10. The pneumatic tire according to claim 9,
wherein the outer portion (20) has a groove depth in a range of from 60% to 140% of a groove depth of the main inclined groove (3).

11. The pneumatic tire according to claim 9 or 10,
wherein the inner portion (19) has a groove depth in a range of from 20% to 80% of a groove depth of the main inclined groove (3).

12. The pneumatic tire according to any one of claims 9 to 11,
wherein the shoulder block (8) comprises a leading portion (8A) and a trailing portion (8B) which are separated by the shoulder lateral groove (18), and
the leading portion (8A) has a tread surface area in a range of from 90% to 110% of that of the trailing portion (8B).

## Patentansprüche

1. Luftreifen, umfassend:
einen Laufflächenabschnitt (2) mit einer vorgegebenen Drehrichtung (N), wobei der Laufflächenabschnitt (2) mit einer Mehrzahl von geneigten Hauptrillen (3) versehen ist, die sich jeweils von dem Reifenäquator (C) axial nach außen zu beiden Laufflächenkanten (Te) erstrecken;
wobei eine jede der geneigten Hauptrillen (3) auf jeder Seite des Reifenäquators (C) einen ersten Abschnitt (4) und einen zweiten Abschnitt (5) umfasst, wobei der erste Abschnitt (4) sich von dem Reifenäquator (C) parallel zu der axialen Richtung des Reifens axial nach außen oder alternativ in die entgegengesetzte Richtung zu der vorgegebenen Drehrichtung (N) des Reifens geneigt erstreckt, wobei der zweite Abschnitt (5) sich von dem ersten Abschnitt (4) axial nach außen erstreckt, während er sich in die entgegengesetzte Richtung zu der vorgegebenen Drehrichtung (N) unter einem Winkel (θ2) neigt, der größer ist als der des ersten Abschnitts (4), so dass zwischen dem ersten Abschnitt (4) und dem zweiten Abschnitt (5) ein abgewinkelter Abschnitt (9) gebildet ist;
die abgewinkelter Abschnitte (9) einer jeden der geneigten Hauptrillen (3) mit den jeweiligen zweiten Abschnitten (5) von einer der geneigten Hauptrillen (3) neben der betreffenden geneigten Hauptrille (3) in der vorgegebenen Drehrichtung (N) kommunizieren, so dass auf dem Laufflächenabschnitt (2) zentrale Blöcke (7) und Schulterblöcke (8) gebildet sind; und
in der vorgegebenen Drehrichtung (N) ein vorderster Abschnitt (10e) von einem jeden der zentralen Blöcke (7) hinter einem vordersten Abschnitt (8e) von einem der Schulterblöcke (8), der axial nach außen hin benachbart zu dem betreffenden zentralen Block (7) liegt, angeordnet ist;
wobei der Laufflächenabschnitt (2) ferner mit einer zentralen Längsrille (13) versehen ist, um ein Paar zentrale Blöcke (7A, 7B) jeweils zwischen zwei benachbarten geneigten Hauptrillen (3) zu bilden.

2. Luftreifen nach Anspruch 1, wobei die zentrale Längsrille (13) eine Rillenbreite (W4) in einem Bereich von 5% bis 35% einer Laufflächenkontaktbreite (TW) aufweist.

3. Luftreifen nach Anspruch 1 oder 2,
wobei der Laufflächenabschnitt (2) einen zentralen Bereich (Cr) umfasst, der eine axiale Breite von 50% einer Laufflächenkontaktbreite (TW) aufweist, und
der zentrale Bereich (Cr) ein Landverhältnis in einem Bereich von 30% bis 60% aufweist.

4. Luftreifen nach einem der Ansprüche 1 bis 3, wobei der erste Abschnitt (4) eine Rillenbreite (W1) in einem Bereich von 0,3% bis 2,3% einer Umfangslänge des Reifens an dem Reifenäquator (C) aufweist.

5. Luftreifen nach einem der Ansprüche 1 bis 4,
wobei der zentrale Block (7) eine vordere Kante (10) und eine hintere Kante (11) mit Bezug auf die vorgegebene Drehrichtung (N) umfasst,
die vordere Kante (10) und die hintere Kante (11) in die gleiche Richtung mit Bezug auf die axiale Richtung des Reifens geneigt sind,
ein Absolutwert der Differenz zwischen Winkeln (α1, α2) der vorderen Kante (10) und der hinteren Kante (11) innerhalb von 5 Grad liegt.

6. Luftreifen nach Anspruch 5, wobei die jeweiligen Winkel (α1, α2) der vorderen Kante (10) und der hinteren Kante (11) in einem Bereich von nicht mehr als 45 Grad liegen.

7. Luftreifen nach einem der Ansprüche 1 bis 6, wobei der zweite Abschnitt (5) eine Rillenbreite (W2) in einem Bereich von 5% bis 35% einer Laufflächenkontaktbreite (TW) aufweist.

8. Luftreifen nach einem der Ansprüche 1 bis 7, wobei der Winkel (θ2) des zweiten Abschnitts (5) in einem Bereich von 60 bis 80 Grad mit Bezug auf die axiale Richtung des Reifens liegt.

9. Luftreifen nach einem der Ansprüche 1 bis 8,
wobei der Schulterblock (8) mit einer Schulterquerrille (18) versehen ist, deren axial inneres Ende (18i) mit der geneigten Hauptrille (3) in Verbindung steht und deren axial äußeres Ende (18e) an der Laufflächenkante (Te) geöffnet ist,
die Schulterquerrille (18) einen axial inneren Abschnitt (19) mit einer Rillenbreite (W5) in einem Bereich von 1,0 bis 3,0 mm und einen axial äußeren Abschnitt (20) mit einer Rillenbreite (W6) aufweist, die größer ist als die des inneren Abschnitts (19), und
die Rillenbreite (W6) des äußeren Abschnitts (20) in einem Bereich von 25% bis 100% einer Rillenbreite der geneigten Hauptrille (3) liegt.

10. Luftreifen nach Anspruch 9, wobei der äußere Abschnitt (20) eine Rillentiefe in einem Bereich von 60% bis 140% einer Rillentiefe der geneigten Hauptrille (3) aufweist.

11. Luftreifen nach Anspruch 9 oder 10, wobei der innere Abschnitt (19) eine Rillentiefe in einem Bereich von 20% bis 80% einer Rillentiefe der geneigten Hauptrille (3) aufweist.

12. Luftreifen nach einem der Ansprüche 9 bis 11,
wobei der Schulterblock (8) einen vorderen Abschnitt (8A) und einen hinteren Abschnitt (8B) umfasst, die durch die Schulterquerrille (18) getrennt sind, und
der vordere Abschnitt (8A) ein Laufflächen-Oberflächenmaß in einem Bereich von 90% bis 110% von dem des hinteren Abschnitts (8B) aufweist.

## Revendications

1. Bandage pneumatique comprenant :
une portion formant bande de roulement (2) ayant une direction de rotation par conception (N), la portion formant bande de roulement (2) étant dotée d'une pluralité de rainures principales inclinées (3) s'étendant chacune axialement vers l'extérieur depuis l'équateur de pneumatique (C) vers les deux bordures de roulement (Te) ;
chacune des rainures principales inclinées (3) comprenant, de chaque côté de l'équateur de pneumatique (C), une première portion (4) et une seconde portion (5), la première portion (4) s'étendant axialement vers l'extérieur depuis l'équateur de pneumatique (C) parallèlement à la direction axiale du pneumatique ou en variante de manière inclinée vers la direction opposée à la direction de rotation par conception (N) du pneumatique, la seconde portion (5) s'étendant axialement vers l'extérieur depuis la première portion (4) tout en étant inclinée vers la direction opposée à la direction de rotation par conception (N) sous un angle (θ2) plus grand que celui de la première portion (4), de sorte qu'une portion coudée (9) est formée entre la première portion (4) et la seconde portion (5) ;
les portions coudées (9) de chacune des rainures principales inclinées (3) communiquent avec les secondes portions respectives (5) de l'une des rainures principales inclinées (3) suivant la rainure principale inclinée concernée (3) dans la direction de rotation par conception (N) de sorte que des blocs centraux (9) et des blocs d'épaulement (8) sont formés sur la portion formant bande de roulement (2) ; et
dans la direction de rotation par conception (N), une portion tout à fait antérieure (10e) de chacun des blocs centraux (7) est positionnée en arrière d'une portion tout à fait antérieure (8e) de l'un des blocs d'épaulement (8) axialement à l'extérieur et adjacent au bloc central concerné (7) ;
dans lequel la portion formant bande de roulement (2) est en outre dotée d'une rainure longitudinale centrale (13) pour former une paire de blocs centraux (7A, 7B), chacun entre deux rainures principales inclinées adjacentes (3).

2. Bandage pneumatique selon la revendication 1,
dans lequel la rainure longitudinale centrale (13) a une largeur de rainure (W4) dans une plage de 5 % à 35 % d'une largeur de contact de la bande de roulement (TW).

3. Bandage pneumatique selon la revendication 1 ou 2,
dans lequel la portion formant bande de roulement (2) comprend une région centrale (Cr) ayant une largeur axiale de 50 % d'une largeur de contact (TW) de la bande de roulement, et
la région centrale (Cr) présente un rapport de relief dans une plage de 30 % à 50 %.

4. Bandage pneumatique selon l'une quelconque des revendications 1 à 3,
dans lequel la première portion (4) présente une largeur de rainure (W1) dans une plage de 0,3 % à 2,3 % d'une longueur circonférentielle du pneumatique au niveau de l'équateur de pneumatique (C).

5. Bandage pneumatique selon l'une quelconque des revendications 1 à 4,
dans lequel le bloc central (7) comprend un bord de tête (10) et un bord de queue (11) par rapport à la direction de rotation par conception (N),
le bord de tête (10) et le bord de queue (11) sont inclinés dans la même direction par rapport à la direction axiale du pneumatique, et
une valeur absolue de la différence entre les angles (α1, α2) du bord de tête (10) et du bord de queue (11) est à l'intérieur de 5°.

6. Bandage pneumatique selon la revendication 5,
dans lequel les angles respectifs (α1, α2) du bord de tête (10) et du bord de queue (11) sont dans une plage qui ne dépasse pas 45°.

7. Bandage pneumatique selon l'une quelconque des revendications 1 à 6,
dans lequel la seconde portion (5) a une largeur de rainure (W2) dans une plage de 5 % à 35 % de la largeur de contact (TW) de la bande de roulement.

8. Bandage pneumatique selon l'une quelconque des revendications 1 à 7,
dans lequel l'angle (θ2) de la seconde portion (5) est dans une plage de 60 à 80° par rapport à la direction axiale du pneumatique.

9. Bandage pneumatique selon l'une quelconque des revendications 1 à 8,
dans lequel le bloc d'épaulement (8) est doté d'une rainure latérale d'épaulement (18) ayant une extrémité axialement intérieure (18i) qui communique avec la rainure principale inclinée (3), et une extrémité axialement extérieure (18e) ouverte au niveau de la bordure de la bande de roulement (Te),
la rainure latérale d'épaulement (18) comprend une portion axialement intérieure (19) ayant une largeur de rainure (W5) dans une plage de 1,0 à 3,0 mm, et une portion axialement extérieure (20) ayant une largeur de rainure (W6) plus grande que celle de la portion intérieure (19), et
la largeur de rainure (W6) de la portion extérieure (20) est dans une plage de 25 % à 100 % d'une largeur de rainure de la rainure principale inclinée (3).

10. Bandage pneumatique selon la revendication 9,
dans lequel la portion extérieure (20) a une profondeur de rainure dans une plage de 60 % à 140 % d'une profondeur de rainure de la rainure principale inclinée (3).

11. Bandage pneumatique selon la revendication neufs ou 10,
dans lequel la portion intérieure (19) a une profondeur de rainure dans une plage de 20 % à 80 % d'une profondeur de rainure de la rainure principale inclinée (3).

12. Bandage pneumatique selon l'une quelconque des revendications 9 à 11,
dans lequel le bloc d'épaulement (8) comprend une portion de tête (8A) et une portion de queue (8B) qui sont séparées par la rainure latérale d'épaulement (18), et
la portion de tête (8A) présente une superficie de roulement dans une plage de 90 % à 110 % de celle de la portion de queue (8B).
